# EUROPEAN PATENT APPLICATION

(11) **EP 4 786 509 A1**
(43) Date of publication of application: **05.08.2026**
(21) Application number: 24871514.6
(22) Date of filing: 05.08.2024
(51) Int. Cl.: C08F 290/12

(54) **CURABLE COMPOSITION, CURED PRODUCT, AND THERMALLY CONDUCTIVE MATERIAL**

(30) Priority: 26.09.2023 JP 2023163586
(71) Applicant: Kaneka Corporation, Osaka-shi, Osaka 530-8288 (JP)
(72) Inventor: SASAKI, Taisuke, Settsu-shi, Osaka 566-0072 (JP)
(74) Representative: Vossius & Partner Patentanwälte Rechtsanwälte mbB
(86) International application number: PCT/JP2024/027874
(87) International publication number: WO 2025/069712

(57) **Abstract**

An object is to provide a curable composition having low surface tackiness even when cured in the presence of oxygen. The object is attained by a curable composition containing a component A: a (meth)acrylic polymer, a component B: a thermally conductive filler, and a component C: a polymerization initiator. The component A contains a component A1: a (meth)acrylic polymer having, on average per molecule, not less than 1.2 crosslinkable functional groups having a carbon-carbon unsaturated bond. Where a content of the component A is 100 parts by weight, a content of the component B is 800 parts by weight to 2000 parts by weight, and a content of the component C is not less than 2 parts by weight.

## Description

### Technical Field

The present invention relates to a curable composition, a cured product, and a thermally conductive material.

### Background Art

Thermally conductive materials to be interposed between a heat generator such as an electronic component and a heat dissipator such as a heat dissipation fin have conventionally been known. Such a thermally conductive material often employs a silicone resin, which has low surface tackiness. However, silicone resins release siloxane gas, and this can cause contact failure in electronic devices. Therefore, a search is underway for a thermally conductive material that does not release siloxane gas and has low surface tackiness (see, for example, Patent Literature 1).

### Citation List

### [Patent Literature]

[Patent Literature 1]
Japanese Patent Application Publication, Tokukai, No. 2006-274094

### Summary of Invention

### Technical Problem

The technology disclosed in Patent Literature 1 has room for improvement in reducing surface tackiness. Specifically, the thermally conductive material may develop surface tackiness when cured in the presence of oxygen, which is a curing inhibitor.

The present invention has been made in view of the above-described problems, and an object of the present invention is to provide a curable composition that has low surface tackiness even when cured in the presence of oxygen.

### Solution to Problem

In order to attain the object, a curable composition in accordance with an aspect of the present invention contains the following components (A) to (C):
a component A: a (meth)acrylic polymer;
a component B: a thermally conductive filler; and
a component C: a polymerization initiator,

wherein the component A contains the following component A1:
   a component A1: a (meth)acrylic polymer having, on average per molecule, not less than 1.2 crosslinkable functional groups having a carbon-carbon unsaturated bond, and
wherein, where a content of the component A is 100 parts by weight, contents of the component B and the component C are as follows:
   the component B: 800 parts by weight to 2000 parts by weight; and
   the component C: not less than 2 parts by weight.

### Advantageous Effects of Invention

An aspect of the present invention provides a curable composition having low surface tackiness even when cured in the presence of oxygen.

### Description of Embodiments

The following description will discuss an example of an embodiment of the present invention in detail. The present invention is, however, not limited to the embodiments below, but may be altered in various ways within the scope of the claims. The present invention also encompasses, in its technical scope, any embodiment derived by combining technical means described in differing embodiments.

Note that the expression "A to B", representing a numerical range, herein means "not less than A and not more than B" unless otherwise specified in this specification. In the present specification, the term "(meth)acryl" refers to "acryl and/or methacryl".

### [1. Components of curable composition]

A curable composition in accordance with an aspect of the present invention contains a component A: a (meth)acrylic resin, a component B: a thermally conductive filler, and a component C: a polymerization initiator. The component A contains, as an essential component, a component A1: a (meth)acrylic polymer having, on average per molecule, not less than 1.2 crosslinkable functional groups having a carbon-carbon unsaturated bond, and optionally contains a component A2: a (meth)acrylic polymer having, on average per molecule, not less than 0.7 and less than 1.2 crosslinkable functional groups having a carbon-carbon unsaturated bond. The curable composition may further contain a component D: a polymerizable monomer and/or oligomer. The curable composition may contain additive(s) other than those listed above. The components will be individually described below in detail.

### [1.1. Component A1: (Meth)acrylic polymer having, on average per molecule, not less than 1.2 crosslinkable functional groups having carbon-carbon unsaturated bond]

The component A1 is a (meth)acrylic polymer having, on average per molecule, not less than 1.2 crosslinkable functional groups having a carbon-carbon unsaturated bond. Only one type of the component A1 may be used, or two or more types of the component A1 may be used.

### [1.1.1. Main chain of component A1]

A (meth)acrylic monomer constituting a main chain of the component A1 is not particularly limited. Examples of the (meth)acrylic monomer include (meth)acrylic acid and (meth)acrylic ester. Examples of the (meth)acrylic ester include methyl (meth)acrylate, ethyl (meth)acrylate, *n-*propyl (meth)acrylate, isopropyl (meth)acrylate, *n-*butyl (meth)acrylate, isobutyl (meth)acrylate, *tert-*butyl (meth)acrylate, *n-*pentyl (meth)acrylate, *n-*hexyl (meth)acrylate, cyclohexyl (meth)acrylate, *n-*heptyl (meth)acrylate, *n-*octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ*-*(methacryloyloxypropyl)trimethoxysilane, an ethylene oxide adduct of (meth)acrylic acid, trifluoromethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate.

From the viewpoint of the physical properties of the obtained component A1, among these monomers, acrylic acid esters and methacrylic acid esters are preferred, acrylic acid esters are more preferred, and at least one type selected from the group consisting of *n-*butyl acrylate, ethyl acrylate, and 2-methoxyethyl acrylate are even more preferred.

The component A1 may be constituted of units derived from only one type of monomer among these monomers, or may be constituted of units derived from two or more types of monomers. The component A1 may be a copolymer of units derived from the above-described preferred monomer(s) and units derived from other (meth)acrylic monomers. In this case, the proportion of the units derived from the preferred monomer(s) in the component A1 is preferably not less than 20% by weight, more preferably not less than 50% by weight, and still more preferably not less than 70% by weight.

The component A1 may have a repeating unit derived from a monomer other than a (meth)acrylic acid-based monomer. In the component A1, the proportion of the repeating unit derived from a (meth)acrylic acid-based monomer is preferably not less than 50% by weight, more preferably not less than 70% by weight, and even more preferably not less than 90% by weight of the total weight of component A1.

### [1.1.2. Crosslinkable functional groups having carbon-carbon unsaturated bond]

The component A1 has, on average per molecule, not less than 1.2 crosslinkable functional groups having a carbon-carbon unsaturated bond. The crosslinkable functional groups may be located in the middle of the main chain of the component A1 or may be located at a terminal of the main chain. In terms of improving elasticity of a cured product, it is preferable that at least one crosslinkable functional group be located at a terminal of the main chain, and it is more preferable that all crosslinkable functional groups be located at terminals of the main chain. That is, it is preferable that at least one crosslinkable functional group having a carbon-carbon unsaturated bond be located at a terminal of the main chain of the component A1. Only one type of the component A1 may be used, or two or more types of the component A1 may be used.

The number of crosslinkable functional groups contained in a molecule of the component A1 can be 2, 3, or more. In an embodiment, the number of crosslinkable functional groups contained in a molecule of the component A1 is 2. However, in synthesis of the component A1, even if it is intended to introduce two (or more) crosslinkable functional groups per molecule, some polymer molecules may have only one crosslinkable functional group introduced therein. Accordingly, the number of crosslinkable functional groups contained in the component A1, when averaged per molecule, is not less than 1.2, and may be not less than 1.5, not less than 1.8, not less than 2.0, not less than 2.2, or not less than 2.5. The number of crosslinkable functional groups contained in the component A1, when averaged per molecule, may be not more than 3.0.

Examples of the crosslinkable functional groups include those represented by the following general formula (a).

-OC(=O)C(R¹)=CH₂ (a)

In the formula, R¹ represents a hydrogen atom or an organic group having 1 to 20 carbon atoms. Specific examples of the structure of R¹ include -H, -CH₃, -CH₂CH₃, -(CH₂)ₙCH₃ (where n represents an integer from 2 to 19), -C₆H₅ (a phenyl group), -CH₂OH, and -CN. From the viewpoint of the reactivity of a (meth)acryloyl functional group, R¹ is preferably -H or - CH₃.

### [1.1.3. Physical properties of component A1]

The molecular weight distribution of the component A1 is preferably not more than 1.8. In the present specification, a molecular weight distribution represents a ratio (Mw/Mn) of a weight average molecular weight (Mw) to a number average molecular weight (Mn). The weight average molecular weight and the number average molecular weight are determined by gel permeation chromatography (GPC). In an embodiment, the mobile phase used for the determination by GPC is chloroform or tetrahydrofuran. In an embodiment, the column used for the determination by GPC is a polystyrene gel column. The molecular weight values are determined as polystyrene-equivalent values.

The number average molecular weight of the component A1 is not particularly limited. The lower limit of the number average molecular weight is preferably not less than 500, more preferably not less than 3,000, even more preferably not less than 5,000, and most preferably not less than 8,000. The upper limit of the number average molecular weight is preferably not more than 1,000,000, more preferably not more than 100,000, even more preferably not more than 80,000, and most preferably not more than 50,000. In a case where the number average molecular weight is too low, properties such as tensile properties required of the component A1 tend not to be readily exhibited. In a case where the number average molecular weight is too high, handling of the polymer tends to be difficult.

The molecular weight distribution of the component A1 is preferably not more than 1.7, more preferably not more than 1.6, even more preferably not more than 1.5, particularly preferably not more than 1.4, and most preferably not more than 1.3. The theoretical lower limit of the molecular weight distribution is 1.

### [1.1.4. Method for producing component A1]

The main chain of the component A1 is preferably produced, for example, by living polymerization. Examples of the living polymerization include living radical polymerization, living anion polymerization, and living cation polymerization. In terms of raw material management, facility design, and production process, living radical polymerization is preferred. Examples of living radical polymerization include atom transfer radical polymerization (ATRP), ARGET, ICAR, SET-LRP, RAFT, and NMP. In terms of ease of material procurement and purification, ATRP and ARGET are preferable. These polymerization methods are well known and will therefore not be described in detail in the present specification (see International Publications No. WO 96/30421, No. WO 97/18247, No. WO 2005/087819, etc.).

### (Method for introducing crosslinkable functional group)

A method for introducing the crosslinkable functional group represented by general formula (a) into the main chain of the component A1 can be carried out using a known method. Such a method is disclosed, for example, in paragraphs [0080] to [0091] of Japanese Patent Application Publication, Tokukai, No. 2004-203932.

In particular, a preferred method is to substitute a terminal halogen group of a (meth)acrylic polymer represented by the following general formula (b) with a compound having a crosslinkable functional group represented by the following general formula (c). This method allows easy control of the reaction.

-CR²R³X (b)

In the formula, R² and R³ are groups that are linked to an ethylenically unsaturated group of the (meth)acrylic monomer. X represents chlorine, bromine, or iodine.

M⁺⁻OC(=O)C(R¹)=CH₂ (c)

In the formula, R¹ is as described for general formula (a). M⁺ represents an alkali metal ion or a quaternary ammonium ion. Examples of the alkali metal ion include a lithium ion, a sodium ion, and a potassium ion. Examples of the quaternary ammonium ion include a tetramethylammonium ion, a tetraethylammonium ion, a tetrabenzylammonium ion, a trimethyldodecylammonium ion, a tetrabutylammonium ion, and a dimethylpiperidinium ion. Preferred M⁺ is one or more selected from the group consisting of a sodium ion and a potassium ion.

A (meth)acrylic polymer having a terminal structure represented by general formula (b) can be produced by polymerizing the main chain using an organic halide or a sulfonyl halide compound as an initiator and a transition metal complex as a catalyst. Alternatively, a (meth)acrylic polymer having a terminal structure represented by general formula (b) can also be produced by polymerizing the main chain using a halogen compound as a chain transfer agent. The former production method is preferred.

When the compound represented by general formula (c) is reacted with the polymer represented by general formula (b), a ratio is set such that the amount of oxyanions in the compound represented by general formula (c) relative to the halogen group(s) in the polymer represented by general formula (b) is preferably 1.0 equivalents to 5.0 equivalents, and more preferably 1.0 equivalents to 1.2 equivalents.

The solvent used for the introduction reaction is preferably a polar solvent. This is because the introduction reaction is a nucleophilic substitution reaction. Examples of the polar solvent include tetrahydrofuran, dioxane, diethyl ether, acetone, dimethyl sulfoxide, dimethylformamide, dimethylacetamide, hexamethylphosphoric triamide, and acetonitrile.

The reaction temperature of the introduction reaction is preferably 0°C to 150°C. From the viewpoint of maintaining the polymerizability of a (meth)acryloyl functional group, the reaction temperature is more preferably from room temperature (for example, 20°C) to 100°C.

### [1.2. Component A2: (Meth)acrylic polymer having, on average per molecule, not less than 0.7 and less than 1.2 crosslinkable functional groups having carbon-carbon unsaturated bond]

The component A2 is a (meth)acrylic polymer having, on average per molecule, not less than 0.7 and less than 1.2 crosslinkable functional groups having a carbon-carbon unsaturated bond. The component A2 is an optional component, and thus may not be contained in the curable composition. The crosslinkable functional groups may be located in the middle of the main chain of the component A2 or may be located at a terminal of the main chain. In terms of improving elasticity of a cured product, it is preferable that at least one crosslinkable functional group be located at a terminal of the main chain, and it is more preferable that all crosslinkable functional groups be located at terminals of the main chain. That is, it is preferable that at least one crosslinkable functional group having a carbon-carbon unsaturated bond be located at a terminal of the main chain of the component A2. Only one type of the component A2 may be used, or two or more types of the component A2 may be used.

The component A2 has a different number of introduced crosslinkable functional groups as compared with the component A1. The number of crosslinkable functional groups contained in a molecule of the component A2 is 1. However, in synthesis of the component A2, even if it is intended to introduce one crosslinkable functional group per molecule, some polymer molecules may have no crosslinkable functional group or more than one crosslinkable functional group introduced therein. Accordingly, the number of crosslinkable functional groups contained in the component A2, when averaged per molecule, is not less than 0.7, and may be not less than 0.8, or not less than 0.9. For a similar reason, the number of crosslinkable functional groups contained in the component A2, when averaged per molecule, is less than 1.2, and may be not more than 1.1. By adding the component A2, it is possible to improve the elongation and flexibility of the cured product.

Additionally, with respect to the main chain, the structure of crosslinkable functional groups, the physical properties, the production method, and the like of the component A2, the description in Section 1 may be suitably applied *mutatis mutandis*.

### [1.3. Component B: Thermally conductive filler]

The component B is a thermally conductive filler. The component B may be a commercially available, general thermally conductive filler with good thermal conductivity. Only one type of the component B may be used, or two or more types of the component B may be used.

The component B may be an acidic, neutral, or basic thermally conductive filler. In terms of improving stability of the curable composition, a neutral thermally conductive filler is preferable. In the present specification, the term "neutral thermally conductive filler" refers to a thermally conductive filler that is neither an acidic thermally conductive filler nor a basic thermally conductive filler. In the present specification, the term "acidic thermally conductive filler" refers to a thermally conductive filler having a pH of less than 6. In the present specification, the term "basic thermally conductive filler" refers to a thermally conductive filler having a pH not less than 8.

Examples of the component B include carbon compounds (such as graphite and diamond), metal oxides (such as aluminum oxide, magnesium oxide, beryllium oxide, titanium oxide, zirconium oxide, and zinc oxide), metal nitrides (such as boron nitride, aluminum nitride, and silicon nitride), metal carbides (such as boron carbide, aluminum carbide, and silicon carbide), metal hydroxides, magnesium carbonate (such as aluminum hydroxide and magnesium hydroxide), metal carbonates (such as calcium carbonate), crystalline silica, fired products of organic polymers (such as fired products of acrylonitrile-based polymers, fired products of furan resins, fired products of cresol resins, fired products of polyvinyl chloride, fired products of sugar, and fired products of charcoal), composite ferrites with Zn ferrite, Fe-Al-Si ternary alloys, and metal powders. Among these, carbon compounds, aluminum oxide, and metal nitrides can be referred to as neutral thermally conductive fillers.

The component B may be one or more selected from the group consisting of graphite, aluminum oxide, magnesium oxide, boron nitride, aluminum nitride, silicon carbide, aluminum hydroxide, magnesium carbonate, and crystalline silica. The component B may be one selected from the group consisting of graphite, α-alumina, hexagonal boron nitride, aluminum nitride, aluminum hydroxide, Mn-Zn soft ferrite, Ni-Zn soft ferrite, an Fe-Al-Si ternary alloy (Sendust), carbonyl iron, and an iron-nickel alloy (permalloy). The component B may be one or more selected from the group consisting of spherical graphite, rounded or spherical α-alumina, spherical hexagonal boron nitride, aluminum nitride, aluminum hydroxide, Mn-Zn soft ferrite, Ni-Zn soft ferrite, a spherical Fe-Al-Si ternary alloy (Sendust), and carbonyl iron. The carbonyl iron may be reduced carbonyl iron powder. The reduced carbonyl iron powder is carbonyl iron powder classified as a reduced grade rather than a standard grade, and has lower contents of carbon and nitrogen than those of the standard grade.

The component B may be subjected to a surface treatment. Examples of a surface treatment agent include silane coupling agents (such as vinylsilane, epoxysilane, (meth)acrylic silane, isocyanatosilane, chlorosilane, and aminosilane), titanate coupling agents (such as alkoxytitanate and aminotitanate), saturated fatty acids (such as caproic acid, caprylic acid, capric acid, lauric acid, myristic acid, palmitic acid, stearic acid, and behenic acid), unsaturated fatty acids (such as sorbic acid, elaidic acid, oleic acid, linoleic acid, linolenic acid, and erucic acid), and resin acids (such as abietic acid, pimaric acid, levopimaric acid, neoabietic acid, palustric acid, dehydroabietic acid, isopimaric acid, sandaracopimaric acid, corum acid, secodehydroabietic acid, and dihydroabietic acid). Application of the surface treatment improves dispersibility in resin.

The component B may contain two or more types of thermally conductive fillers having different particle sizes. The particle size ratio between the thermally conductive filler having a larger particle size and the thermally conductive filler having a smaller particle size is preferably from 100/5 to 100/20.

In an embodiment, the component B contains aluminum oxide. In an embodiment, the component B consists of aluminum oxide. The aluminum oxide preferably has an average particle size of not less than 1 µm and not more than 80 µm. Two types of aluminum oxide having different average particle sizes may be used.

### [1.4. Component C: Polymerization initiator]

The component C is a polymerization initiator. Examples of the polymerization initiator include a thermal radical polymerization initiator and a photoradical polymerization initiator. The component C is preferably a thermal radical polymerization initiator. Only one type of the component C may be used, or two or more types of the component C may be used.

Examples of the thermal radical polymerization initiator include an azo initiator, peroxide, peroxymonosulfuric acid, and a redox initiator. Among these, an azo initiator and peroxide are more preferred. Examples of the azo initiator include 2,2'-azobis(isobutyronitrile) and 2,2'-azobis-2-methylbutyronitrile. Examples of the peroxide include *t-*butyl peroxypivalate, di(4*-t-*butylcyclohexyl) peroxydicarbonate, *t-*butyl peroxyisopropyl monocarbonate, *t-*butyl peroxy-2-ethylhexanoate, dicumyl peroxide, and benzoyl peroxide.

### [1.5. Component D: Polymerizable monomer and/or oligomer]

The component D is a polymerizable monomer and/or oligomer. Examples of the component D include substances described in paragraphs [0110] to [0124] of Japanese Patent Application Publication, Tokukai, No. 2006-274085. Adding the component D enables reduced viscosity and improved curability of the curable composition and improved mechanical properties of the cured product. Only one type of the component D may be used, or two or more types of the component D may be used.

In an embodiment, the component D is a (meth)acrylic monomer and/or oligomer. In an embodiment, the component D is a (meth)acrylic monomer. Examples of the (meth)acrylic monomer include those listed as examples in Section [1.1]. Specific examples of the component D include isobornyl acrylate, isononyl acrylate, isostearyl acrylate, and dicyclopentanyl acrylate.

### [1.6. Other components]

In an embodiment, the curable composition may contain various additives in addition to the components described above, according to the purpose. Examples of the additives include additives other than the thermally conductive filler, such as a plasticizer, a solvent, a thixotropy-imparting agent, an antioxidant, and others. Each of these additives may be used alone, or two or more thereof may be used in combination.

### [1.6.1. Plasticizer]

By adding a plasticizer, the viscosity of the curable composition and the mechanical properties (such as tensile strength and elongation) of the cured product can be adjusted. The addition of a plasticizer also enables an improvement in transparency of the cured product.

Examples of the plasticizer include: phthalate esters (such as dibutyl phthalate, diheptyl phthalate, di(2-ethylhexyl) phthalate, butyl benzyl phthalate, and dodecyl phthalate); aromatic esters of polyalkylene glycols (such as diethylene glycol dibenzoate and triethylene glycol dibenzoate); phosphate esters (such as tricresyl phosphate and tributyl phosphate); trimellitate esters; pyromellitate esters; polystyrene-based resins (such as polystyrene and poly*-a-*methylstyrene); ester-based plasticizers obtained by reacting a saturated aliphatic alcohol and a saturated fatty acid; polybutadiene; polybutene; polyisobutylene; butadiene-acrylonitrile; polychloroprene; chlorinated paraffins; hydrocarbon-based oils (such as alkyldiphenyl and partially hydrogenated terphenyl); process oils; polyethers (such as polyether polyols (such as polyethylene glycol, polypropylene glycol, and polytetramethylene glycol) and derivatives in which hydroxyl groups of the polyether polyols are converted into ester groups, ether groups, or the like); epoxy plasticizers (such as epoxidized soybean oil and benzyl epoxystearate); and (meth)acrylic polymers (such as acrylic plasticizers; commercially available products include ARUFON series (manufactured by TOAGOSEI CO., LTD.), and the like) obtained by polymerizing a vinyl-based monomer by various methods.

The amount of the plasticizer added is preferably 1 part by weight to 100 parts by weight, and more preferably 1 part by weight to 50 parts by weight, where the content of the component A is 100 parts by weight. In a case where the amount of the plasticizer added is within the above range, the workability of the curable composition is good, and the mechanical properties of an obtained cured product are also less affected. Only one type of plasticizer may be used alone, or two or more types of plasticizers may be used in combination.

### [1.6.2. Solvent]

Examples of a solvent include: aromatic hydrocarbon-based solvents (such as toluene and xylene); ester-based solvents (such as ethyl acetate, butyl acetate, amyl acetate, and cellosolve acetate); ketone-based solvents (such as acetone, methyl ethyl ketone, methyl isobutyl ketone, and diisobutyl ketone); alcohol-based solvents (such as methanol, ethanol, and isopropanol); and hydrocarbon-based solvents (such as hexane, cyclohexane, methylcyclohexane, heptane, and octane).

The amount of the solvent added is preferably not more than 50 parts by weight, and more preferably not more than 30 parts by weight, where the content of the component A is 100 parts by weight. In a case where the amount of the solvent added is within the above range, the workability of the curable composition is good, and the effect of cure shrinkage is also small. From the viewpoint of reducing an impact on the working environment, the amount of the solvent added is even more preferably not more than 10 parts by weight, where the content of the component A is 100 parts by weight. Only one type of solvent may be used alone, or two or more types of solvents may be used in combination.

### [1.6.3. Thixotropy-imparting agent]

By adding a thixotropy-imparting agent (anti-sagging agent), sagging can be prevented and workability can be improved.

Examples of the thixotropy preventing agent include hydrogenated castor oil derivatives, metal soaps having a long-chain alkyl group, ester compounds having a long-chain alkyl group, inorganic fillers (such as silica), and amide waxes.

The amount of the thixotropy-imparting agent added is preferably 0.1 parts by weight to 10 parts by weight, and more preferably 0.1 parts by weight to 5 parts by weight, where the content of the component A is 100 parts by weight. In a case where the amount of the thixotropy-imparting agent added is within the above range, the workability of the curable composition is good. Only one type of thixotropy-imparting agent may be used alone, or two or more types of thixotropy-imparting agents may be used in combination.

### [1.6.4. Antioxidant]

Adding an antioxidant (anti-aging agent) makes it possible to increase the heat resistance of the cured product.

Examples of the antioxidant include primary antioxidants (such as hindered phenol-based antioxidants, amine-based antioxidants, lactone-based antioxidants, and ethanolamine-based antioxidants) and secondary antioxidants (such as sulfur-based oxidizer and phosphorus-based oxidizer). Further examples of the antioxidant include substances described in paragraphs [0232] to [0235] of Japanese Patent Application Publication, Tokukai, No. 2007-308692 and substances described in paragraphs [0089] to [0093] of International Publication No. WO 2005/116134.

The amount of the antioxidant added is preferably 0.1 parts by weight to 5 parts by weight, and more preferably 0.1 parts by weight to 3 parts by weight, where the content of the component A is 100 parts by weight. In a case where the amount of antioxidant added is within the above range, the heat resistance effect is sufficiently exhibited, and no economic disadvantage is incurred.

### [1.6.5. Other additives]

Examples of the other additives include compatibilizers, curability adjusting agents, radical inhibitors, metal deactivators, antiozonants, phosphorus-based peroxide decomposition agents, lubricants, pigments, antifoaming agents, foaming agents, termite repellents, antifungal agents, ultraviolet absorbers, and light stabilizers. Further examples of the other additives include additives described in Japanese Patent Application Publication, Tokukaisho, No. 63-006041, Japanese Patent Application Publication, Tokukaisho, No. 63-006003, Japanese Patent Application Publication, Tokukaisho, No. 63-254149, Japanese Patent Application Publication, Tokukaisho, No. 64-022904, and Japanese Patent Application Publication, Tokukai, No. 2001-072854.

### [2. Makeup of curable composition]

In the production of a thermally conductive material using a (meth)acrylic resin as a material instead of a silicone resin, a (meth)acrylic curable composition containing a polymerization initiator such as a thermal curing initiator is cured. In some cases, however, when the curable composition is cured in the presence of oxygen, the oxygen inhibits the curing and causes insufficient curing of, for example, surfaces that are in contact with the oxygen. The inventors of the present invention conducted extensive studies and found that this problem can be solved by setting the contents of the thermally conductive filler and the polymerization initiator within specific ranges relative to the (meth)acrylic polymer.

The lower limit of the content of the component B is not less than 800 parts by weight, preferably not less than 1000 parts by weight, and more preferably not less than 1500 parts by weight, where the content of the component A is 100 parts by weight. The upper limit of the content of the component B is not more than 2000 parts by weight, and preferably not more than 1800 parts by weight, where the content of the component A1 is 100 parts by weight. In a case where the content of the component B falls within the above-described range, the cured product has less surface tackiness and improved thermal conductivity.

The lower limit of the content of the component C is not less than 2 parts by weight, preferably not less than 3 parts by weight, and more preferably not less than 5 parts by weight, where the content of the component A is 100 parts by weight. The upper limit of the content of the component C is, for example, not more than 15 parts by weight. In a case where the content of the component C falls within the above-described range, the surface tackiness of the resultant cured product is reduced.

The lower limit of the content of the component D is not less than 20 parts by weight, preferably not less than 50 parts by weight, and more preferably not less than 70 parts by weight, where the content of the component A is 100 parts by weight. The lower limit of the content of the component D is preferably not more than 200 parts by weight, and more preferably not more than 150 parts by weight.

The content ratio (weight ratio) of the component A1 to the component A2, Component A1:Component A2, is preferably (1:99) to (99:1), more preferably (10:90) to (90:10), and even more preferably (20:80) to (80:20).

### [3. Cured product]

An aspect of the present invention is a cured product obtained by curing the above-described curable composition. By curing the curable composition by a known method suitable for the polymerization initiator, a cured product is obtained. For example, in a case where a thermal radical polymerization initiator is contained as the component C, a cured product is obtained by heating.

In an embodiment, the cured product is in the form of a sheet. The lower limit of the thickness of the sheet may be not less than 0.1 mm, not less than 0.5 mm, not less than 1 mm, not less than 5 mm, or not less than 10 mm. The upper limit of the thickness of the sheet may be not more than 100 mm, not more than 90 mm, not more than 80 mm, not more than 70 mm, not more than 60 mm, or not more than 50 mm.

The sheet-shaped cured product can be produced by, for example, curing the curable composition after applying the curable composition to a base material. The sheet-shaped cured product may be used in a state in which the sheet has been peeled from the base material, or may be used in a state in which the base material and the sheet are integrated.

### [4. Thermally conductive material]

A thermally conductive material in accordance with an aspect of the present invention contains the above-described cured product. In an embodiment, the thermally conductive material consists of the above-described cured product. The above-described cured product has reduced surface tackiness even in a case where the cured product has been cured in the presence of oxygen, and is therefore easy to handle.

The thermally conductive material can be used as a material interposed between a heat generator and a heat dissipator. Examples of applications of the thermally conductive material include electronic and electrical equipment, lighting components, display devices, precision machinery, and automobiles. Examples of the electronic equipment include mobile phones, smartphones, laptop computers, and tablet devices. For use in automobiles, the thermally conductive material can be used for components such as those around a battery of an electric vehicle.

The lower limit of the thermal conductivity of the thermally conductive material is preferably not less than 0.7 W/mK, more preferably not less than 0.8 W/mK, and still more preferably not less than 0.9 W/mK. The upper limit of the thermal conductivity can be, for example, not more than 5.0 W/mK. Such a thermally conductive material can be regarded as a highly thermally conductive material. Therefore, heat from the heat generator can be dissipated more efficiently than in a case where the heat generator is in contact with air.

### [5. Recap]

The present invention includes the following aspects:
<1> A curable composition, containing the following components A to C:
   a component A: a (meth)acrylic polymer;
   a component B: a thermally conductive filler; and
   a component C: a polymerization initiator,

   wherein the component A contains the following component A1:
      a component A1: a (meth)acrylic polymer having, on average per molecule, not less than 1.2 crosslinkable functional groups having a carbon-carbon unsaturated bond, and
   wherein, where a content of the component A is 100 parts by weight, contents of the component B and the component C are as follows:
      the component B: 800 parts by weight to 2000 parts by weight; and
      the component C: not less than 2 parts by weight.
<2> The curable composition described in <1>, wherein the component A further contains the following component A2:
   a component A2: a (meth)acrylic polymer having, on average per molecule, not less than 0.7 and less than 1.2 crosslinkable functional groups having a carbon-carbon unsaturated bond.
<3> The curable composition described in <1> or <2>, wherein at least one of the crosslinkable functional groups having a carbon-carbon unsaturated bond is located at a terminal of a main chain of the component A1.
<4> The curable composition described in <2>, wherein at least one of the crosslinkable functional groups having a carbon-carbon unsaturated bond is located at a terminal of a main chain of the component A2.
<5> The curable composition described in any one of <1> to <4>, wherein the component B is a neutral thermally conductive filler.
<6> The curable composition described in any one of <1> to <5>, wherein the component C is a thermal radical polymerization initiator.
<7> The curable composition described in any one of <1> to <6>, further containing the following component D:
   a component D: a polymerizable monomer and/or oligomer.
<8> A cured product obtained by curing a curable composition described in any one of <1> to <7>.
<9> The cured product described in <8>, wherein the cured product is in a form of a sheet.
<10> A thermally conductive material, containing a cured product described in <8> or <9>.

### Examples

The following will provide specific Examples of the present invention. Note that the present invention is not limited to the Examples below.

### [Measurement methods]

### [Number average molecular weight and molecular weight distribution]

A number average molecular weight and a molecular weight distribution (a ratio of weight-average molecular weight to number-average molecular weight) were calculated by a standard polystyrene conversion method using gel permeation chromatography (GPC). Chloroform was used as a mobile phase in the GPC. As a stationary phase in the GPC, Shodex K-804 (polystyrene gel, Showa Denko K.K.) and Shodex K-802.5 (polystyrene gel, Showa Denko K.K.) were used.

### [Average number of functional groups introduced per molecule]

An average number of functional groups introduced per polymer molecule was calculated on the basis of a concentration analysis by ¹H-NMR and the number average molecular weight. A device for the NMR used was ASX-400 (Bruker). As a solvent for the NMR, deuterated chloroform was used.

### [Surface tackiness]

The surface of an obtained cured product was checked by finger touch, and was evaluated according to the following criteria.
++: No tackiness was felt at all
+: Almost no tackiness was felt
-: Strong tackiness was felt
--: Uncured

### [Thermal conductivity measurement]

Measurement was performed according to the following procedure.
1. A curable composition was applied to a plastic sheet, and two disk-shaped samples each having a thickness of 3 mm and a diameter of 20 mm were prepared.
2. Using a hot disk method thermal conductivity measuring device (TPA-501, KYOTO ELECTRONICS MANUFACTURING CO., LTD), the thermal conductivity of a cured product was measured. A method was employed in which a 4φ sensor was sandwiched between the two samples.

### [Tensile properties]

Measurement was performed according to the following procedure.
1. An obtained composition with which a mold was filled was cured at 23°C and 50% RH for 3 days.
2. Then, the composition was further cured at 50°C for 4 days. In this manner, a sheet-shaped cured product having a thickness of approximately 3 mm was prepared.
3. The sheet-shaped cured product was punched out into a No. 3 dumbbell shape to obtain a test sample.
4. The strength at break and the elongation at break were measured at 23°C and 50% RH. The tensile speed was set to 200 mm/min. For the measurement, an Autograph (AGS-J, Shimadzu Corporation) was used.

### [Shore A hardness]

Shore A hardness was measured using a durometer (Shimadzu Durometer, Shimadzu Corporation). At the time of measurement, three sheet-shaped cured products were stacked, and the thickness was adjusted to approximately 6 mm to 8 mm for measurement.

### [Viscosity]

Viscosity of the curable composition before curing was measured. An E-type viscometer (VISCOMETER TV-25H, Toki Sangyo Co., Ltd.) was used as a measurement device. The measurement temperature was 23°C.

### [Materials]

The materials used in Examples and Comparative Examples are as follows.
• Component A1: (Meth)acrylic polymer having, on average per molecule, not less than 1.2 crosslinkable functional groups having a carbon-carbon unsaturated bond
   · (Meth)acrylic polymer (1) obtained in Production Example 1
   · (Meth)acrylic polymer (2) obtained in Production Example 2
• Component A2: (Meth)acrylic polymer having, on average per molecule, not less than 0.7 and less than 1.2 crosslinkable functional groups having a carbon-carbon unsaturated bond
   · (Meth)acrylic polymer (3) obtained in Production Example 3
• Component B: Thermally conductive filler
   · Aluminum oxide (DAW-07, Denka Company Limited)
• Component C: Polymerization initiator
   · *t-*butyl peroxy-2-ethylhexanoate (PERBUTYL O, NOF CORPORATION)
• Component D: Polymerizable monomer and/or oligomer.
   · Isobornyl acrylate
   · Isononyl acrylate
• Plasticizer
   · Dodecyl phthalate

### [Production Example 1: Synthesis of (meth)acrylic polymer (1)]

### (Polymerization step)

1. 74 parts by weight of *n-*butyl acrylate, 25 parts by weight of ethyl acrylate, and 21 parts by weight of 2-methoxyethyl acrylate were mixed to obtain 100 parts by weight of a monomer mixture. Then, the monomer mixture was deoxygenated.
2. The inside of a stainless steel reaction vessel equipped with a stirrer was deoxygenated. 0.31 parts by weight of cuprous bromide and 20 parts by weight of the monomer mixture were introduced into the reaction vessel and heated with stirring.
3. 4.4 parts by weight of acetonitrile and 12.5 parts by weight of an initiator (diethyl 2,5-dibromoadipate) were further added to the reaction vessel and mixed. After adjusting the temperature of the mixed solution to approximately 80°C, 0.01 parts by weight of pentamethyldiethylenetriamine was added to initiate a polymerization reaction.
4. The remaining 80 parts by weight of the monomer mixture was sequentially added to advance the polymerization reaction. During the polymerization reaction, pentamethyldiethylenetriamine was additionally added as appropriate to adjust the polymerization speed. The total amount of pentamethyldiethylenetriamine used throughout the polymerization step was 0.10 parts by weight. In the polymerization step, in order to prevent the inside of the system from being overheated by polymerization heat, the internal temperature of the system was maintained at approximately 80°C to approximately 90°C.
5. When the polymerization conversion rate reached approximately not less than 95%, an oxygen-nitrogen mixed gas was introduced into the gas phase part of the reaction vessel. While maintaining the internal temperature of the system at approximately 80°C to approximately 90°C, the reaction solution was heated with stirring for several hours to bring the polymerization catalyst into contact with oxygen. Then, acetonitrile and unreacted monomer were removed by devolatilization under reduced pressure to obtain a polymer (P-1). The obtained polymer (P-1) was colored dark green.

### (Purification step)

6. 100 parts by weight of the polymer (P-1) was diluted by adding approximately 100 parts by weight of butyl acetate. To the diluted liquid, a filter aid was added, and the mixture was heat-treated and filtered.

7. Adsorbents (KYOWAAD 700SEN and KYOWAAD 500SH) were added to the filtrate, and filtration was carried out again to obtain a clear liquid. The filtrate was concentrated to obtain a substantially colorless and transparent purified product of the polymer (P-1).

### (Acryloyl group introduction step)

8. 100 parts by weight of the polymer (P-1) was dissolved in 100 parts by weight of *N,N-*dimethylacetamide. 1.6 parts by weight of potassium acrylate, 0.01 parts by weight of a thermal stabilizer (4-hydroxy-2,2,6,6-tetramethylpiperidine-n-oxyl), and 0.4 parts by weight of an adsorbent (KYOWAAD 700SEN) were further added. The resultant mixture was heated with stirring at approximately 70°C for several hours.

9. After distilling off the solvent *N,N-*dimethylacetamide under reduced pressure, dilution was carried out again with 100 parts by weight of butyl acetate, a filter aid was added, and the solid content was separated by filtration. The filtrate was concentrated to obtain a (meth)acrylic polymer (1) having an acryloyl group at a terminal. The polymer was colored brown.

The obtained (meth)acrylic polymer (1) had a number average molecular weight of approximately 30,000 and a molecular weight distribution of 1.2. The number of acryloyl groups introduced into the polymer was, on average per molecule, approximately 1.9.

### [Production Example 2: Synthesis of (meth)acrylic polymer (2)]

### (Polymerization step)

1. 100 parts by weight of *n-*butyl acrylate was deoxygenated.

2. The inside of a stainless steel reaction vessel equipped with a stirrer was deoxygenated. 0.42 parts by weight of cuprous bromide and 20 parts by weight of *n-*butyl acrylate were introduced into the reaction vessel and heated with stirring.

3. 5 parts by weight of acetonitrile and 5.1 parts by weight of an initiator (diethyl 2,5-dibromoadipate) were further added to the reaction vessel and mixed. After adjusting the temperature of the mixed solution to approximately 80°C, 0.01 parts by weight of pentamethyldiethylenetriamine was added to initiate a polymerization reaction.

4. The remaining 80 parts by weight of *n-*butyl acrylate was sequentially added to advance the polymerization reaction. During the polymerization reaction, pentamethyldiethylenetriamine was additionally added as appropriate to adjust the polymerization speed. The total amount of pentamethyldiethylenetriamine used throughout the polymerization step was 0.09 parts by weight. In the polymerization step, in order to prevent the inside of the system from being overheated by polymerization heat, the internal temperature of the system was maintained at approximately 80°C to approximately 90°C.

6. When the polymerization conversion rate reached approximately not less than 95%, an oxygen-nitrogen mixed gas was introduced into the gas phase part of the reaction vessel. While maintaining the internal temperature of the system at approximately 80°C to approximately 90°C, the reaction solution was heated with stirring for several hours to bring the polymerization catalyst into contact with oxygen. Then, acetonitrile and unreacted monomer were removed by devolatilization under reduced pressure to obtain a polymer (P-2). The obtained polymer (P-2) was colored dark green.

### (Purification Step)

6. 100 parts by weight of the polymer (P-1) was diluted by adding approximately 100 parts by weight of butyl acetate. To the diluted liquid, a filter aid was added, and the mixture was heat-treated and filtered.

7. Adsorbents (KYOWAAD 700SEN and KYOWAAD 500SH) were added to the filtrate, and filtration was carried out again to obtain a clear liquid. The filtrate was concentrated to obtain a substantially colorless and transparent purified product of the polymer (P-2).

### (Acryloyl group introduction step)

8. 100 parts by weight of the polymer (P-2) was dissolved in 100 parts by weight of *N,N-*dimethylacetamide. 3.3 parts by weight of potassium acrylate, 0.01 parts by weight of a thermal stabilizer (4-hydroxy-2,2,6,6-tetramethylpiperidine-n-oxyl), and 0.04 parts by weight of an adsorbent (KYOWAAD 700SEN) were further added. The resultant mixture was heated with stirring at approximately 70°C for several hours.

9. After distilling off the solvent *N,N-*dimethylacetamide under reduced pressure, dilution was carried out again with 100 parts by weight of butyl acetate, a filter aid was added, and the solid content was separated by filtration. The filtrate was concentrated to obtain a (meth)acrylic polymer (2) having an acryloyl group at a terminal. The polymer was colored brown.

The obtained (meth)acrylic polymer (2) had a number average molecular weight of approximately 11,500 and a molecular weight distribution of 1.2. The number of acryloyl groups introduced into the polymer was, on average per molecule, approximately 1.9.

### [Synthesis Example 3: Synthesis of (meth)acrylic polymer (3)]

### (Polymerization step)

1. 4.2 parts by weight of cuprous bromide and 44 parts by weight of acetonitrile were introduced into a reaction vessel equipped with a stirrer, and the mixture was stirred at 70°C for 15 minutes under a nitrogen atmosphere.

2. 100 parts by weight of *n-*butyl acrylate and 9.5 parts by weight of ethyl 2-bromobutyrate were added to the reaction vessel and stirred to mix.

3. 0.17 parts by weight of pentamethyldiethylenetriamine was added to the reaction vessel to initiate polymerization.

4. While stirring at 80°C, 400 parts by weight of *n-*butyl acrylate was continuously added dropwise. During the dropwise addition of *n-*butyl acrylate, 0.68 parts by weight of pentamethyldiethylenetriamine was added in 9 divided portions.

5. When the monomer conversion rate reached 96%, acetonitrile and unreacted monomer were removed by devolatilization at 80°C to obtain a polymer (P-3).

### (Purification Step)

6. 100 parts by weight of the polymer (P-3) was diluted by adding thereto approximately 100 parts by weight of butyl acetate. To the diluted liquid, a filter aid was added, and the mixture was heat-treated and filtered.

7. Adsorbents (KYOWAAD 700SEN and KYOWAAD 500SH) were added to the filtrate, and filtration was carried out again to obtain a clear liquid. The filtrate was concentrated to obtain a substantially colorless and transparent purified product of the polymer (P-3).

### (Acryloyl group introduction step)

8. 100 parts by weight of the polymer (P-3) was dissolved in 100 parts by weight of *N,N-*dimethylacetamide. 1.9 parts by weight of potassium acrylate and 0.01 parts by weight of a thermal stabilizer (4-hydroxy-2,2,6,6-tetramethylpiperidine-n-oxyl) were added, and the resultant mixture was heated with stirring at 70°C for 8 hours.

9. The solvent *N,N-*dimethylacetamide was distilled off under reduced pressure at 100°C for 4 hours to obtain a crude product of a (meth)acrylic polymer (3) having an acryloyl group at one terminal.

10. 100 parts by weight of the obtained crude product was dissolved in 100 parts by weight of butyl acetate, and the insoluble matter was removed.

11. The solvent was distilled off from the polymer solution under reduced pressure at 80°C for 4 hours to obtain a (meth)acrylic polymer (3) having an acryloyl group at one terminal.

The obtained (meth)acrylic polymer (3) had a number average molecular weight of approximately 12,000 and a molecular weight distribution of 1.2. The number of acryloyl groups introduced into the polymer was, on average per molecule, approximately 0.9.

### [Examples 1 to 8 and Comparative Examples 1 to 4]

Samples for physical properties evaluation were produced by the following procedure.
1. Components were prepared in respective amounts (unit: g) indicated in Table 1.
2. The components other than the component C were added to a plastic cup and stirred with a spatula.
3. The mixture was stirred at 1600 rpm for 1.5 minutes and then defoamed at 2200 rpm for 3 minutes using a planetary centrifugal mixer (AWATORI RENTARO, Thinky Corporation).
4. Subsequently, to the resulting monomer mixture, the component C was added in an amount indicated in the table, and the mixture was stirred with a spatula.
5. The mixture was stirred at 1600 rpm for 1.5 minutes and then defoamed at 2200 rpm for 3 minutes using a planetary centrifugal mixer (AWATORI RENTARO, Thinky Corporation). Thus, a curable composition was obtained.

### [Results]

Results are shown in Table 1.

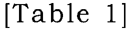

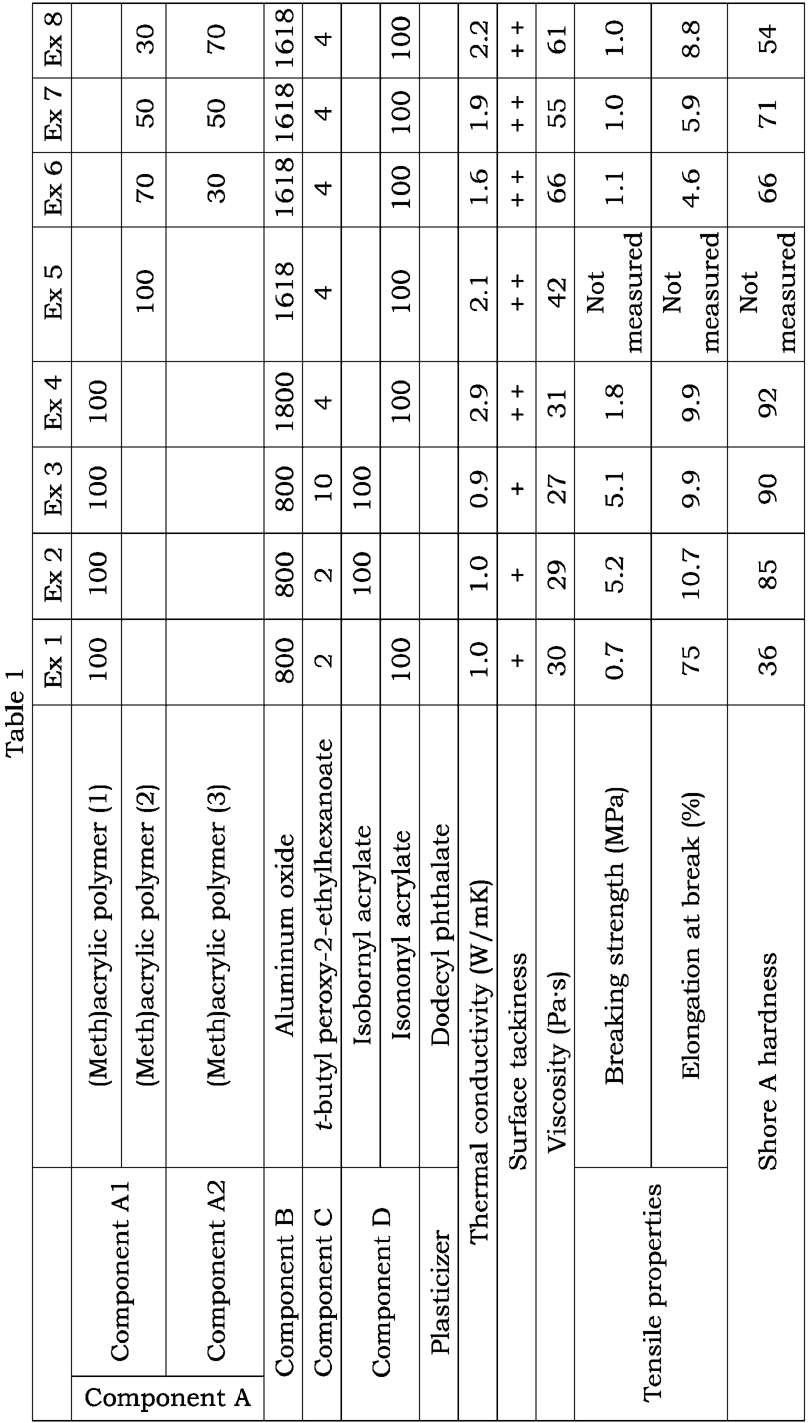

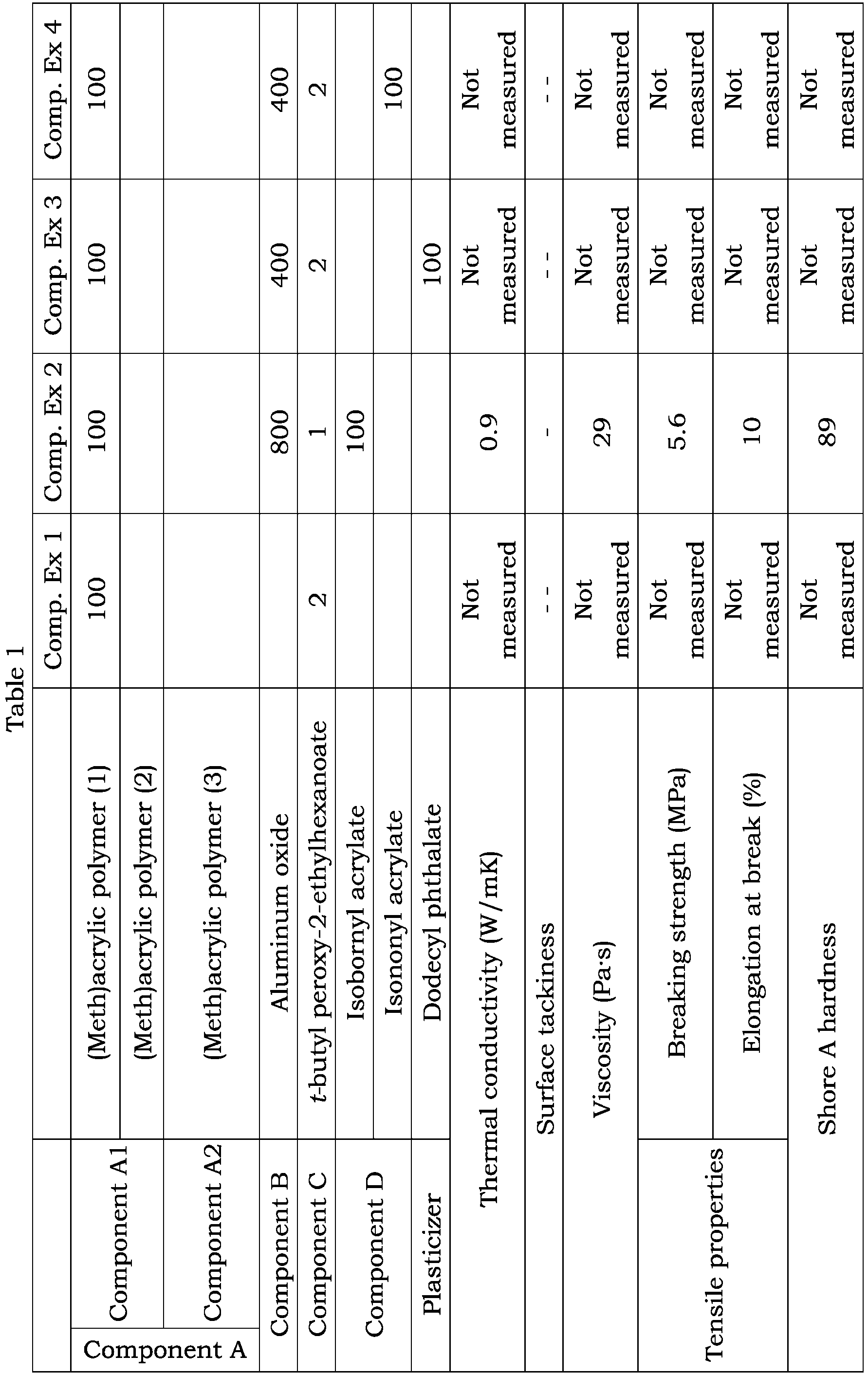

As can be seen from Table 1, cured products containing predetermined amounts of the component B and the component C had reduced surface tackiness when cured in the presence of oxygen. It is understood from a comparison between Example 1 and Comparative Example 4 that the amount of the component B added needs to be not less than 800 parts by weight where the amount of the component A added is 100 parts by weight. It is understood from a comparison between Example 2 and Comparative Example 2 that the amount of the component C added needs to be not less than 2 parts by weight where the amount of the component A added is 100 parts by weight. When Examples 1 to 3 are compared with Examples 4 to 8, it is understood that by adding the component B in a large amount (for example, by adding the component B in an amount of at least 1000 parts by weight where the amount of the component A added is 100 parts by weight), surface tackiness is further reduced.

### Industrial Applicability

The present invention can be used for a thermally conductive material and the like.

## Claims

1. A curable composition, comprising the following components A to C:
a component A: a (meth)acrylic polymer;
a component B: a thermally conductive filler; and
a component C: a polymerization initiator,
wherein the component A contains the following component A1:
a component A1: a (meth)acrylic polymer having, on average per molecule, not less than 1.2 crosslinkable functional groups having a carbon-carbon unsaturated bond, and
wherein, where a content of the component A is 100 parts by weight, contents of the component B and the component C are as follows:
the component B: 800 parts by weight to 2000 parts by weight; and
the component C: not less than 2 parts by weight.

2. The curable composition as set forth in claim 1, wherein the component A further contains the following component A2:
a component A2: a (meth)acrylic polymer having, on average per molecule, not less than 0.7 and less than 1.2 crosslinkable functional groups having a carbon-carbon unsaturated bond.

3. The curable composition as set forth in claim 1, wherein at least one of the crosslinkable functional groups having a carbon-carbon unsaturated bond is located at a terminal of a main chain of the component A1.

4. The curable composition as set forth in claim 2, wherein at least one of the crosslinkable functional groups having a carbon-carbon unsaturated bond is located at a terminal of a main chain of the component A2.

5. The curable composition as set forth in claim 1, wherein the component B is a neutral thermally conductive filler.

6. The curable composition as set forth in claim 1, wherein the component C is a thermal radical polymerization initiator.

7. The curable composition as set forth in claim 1, further comprising the following component D:
a component D: a polymerizable monomer and/or oligomer.

8. A cured product obtained by curing a curable composition recited in any one of claims 1 to 7.

9. The cured product as set forth in claim 8, wherein the cured product is in a form of a sheet.

10. A thermally conductive material, comprising a cured product recited in claim 8.
